# EUROPÄISCHE PATENTANMELDUNG

(11) **EP 1 463 345 A2**
(43) Veröffentlichungstag der Anmeldung: **29.09.2004**
(21) Anmeldenummer: 04100712.1
(22) Anmeldetag: 24.02.2004
(51) Int. Cl.: H04Q 7/22

(54) **Verfahren und System zum Übermitteln von Positionsdaten oder Koordinaten eines Zielorts**

(30) Priorität: 26.03.2003 DE 10313541
(71) Anmelder: ROBERT BOSCH GMBH, 70442 Stuttgart (DE)
(72) Erfinder: Schappert, Juergen, 31089 Duingen (DE); Armbrecht, Oliver, 31139 Hildesheim (DE)

(57) **Zusammenfassung**

Um auf dem technischen Gebiet der Telematik, insbesondere der Verkehrstelematik, ein Verfahren sowie ein System (100) bereitzustellen, mittels derer beim Vereinbaren eines Zielorts (40), insbesondere eines Treffpunkts (= eines gemeinsamen Zielpunkts), Schwierigkeiten oder Unklarheiten schon im voraus sicher und zuverlässig beseitigt sowie ausgeschlossen werden können, wird ein Verfahren sowie ein System (100) zum Übermitteln der Positionsdaten oder Koordinaten (40x; 40y) des Zielorts (40), insbesondere der Zielkoordinaten des Treffpunkts, von einem ersten Teilnehmer (10), insbesondere von einem ersten Verkehrsteilnehmer, an mindestens einen weiteren Teilnehmer (20, 30), insbesondere an mindestens einen weiteren Verkehrsteilnehmer, vorgeschlagen, aufweisend die folgenden Schritte:
[a] Erstellen mindestens einer die Positionsdaten oder Koordinaten (40x; 40y) des Zielorts (40) beinhaltenden Kurzmitteilung oder Kurznachricht (16, 18), insbesondere in Form von S[hort]M[essage]S[ervice] oder in Form von M[ultimedia]M[essage]S[ervice], durch den ersten Teilnehmer (10);
[b] Versenden der erstellten Kurzmitteilung oder Kurznachricht (16, 18) an den weiteren Teilnehmer (20, 30), insbesondere an die Mobilfunknummer des weiteren Teilnehmers (20, 30);
[c] Empfangen bzw. Akzeptieren des Inhalts der versendeten Kurzmitteilung oder Kurznachricht (16, 18) durch den weiteren Teilnehmer (20, 30); und
[d] Aktivieren bzw. Starten mindestens einer für den weiteren Teilnehmer (20, 30) vorgesehenen Zielführung zum Zielort (40).

## Beschreibung

### Technisches Gebiet

Die vorliegende Erfindung betrifft das technische Gebiet der Telematik, insbesondere der Verkehrstelematik.

### Stand der Technik

Konventionellerweise nutzen viele Mobilfunkteilnehmer die Möglichkeiten der Kurzmitteilung bzw. Kurznachricht, insbesondere auf S[hort]M[essage]S[ervice]-Basis, um Daten auszutauschen. Hierbei werden gegebenenfalls Treffpunkte vereinbart, die dann mittels des jeweiligen Fortbewegungsmittels, insbesondere mittels des jeweiligen Kraftfahrzeugs, vom jeweiligen (Mobilfunk-)Teilnehmer mühsam angesteuert werden müssen.

Unabhängig hiervon nutzen Systeme zum Flottenmanagement die Übermittlung von Positionsdaten oder von Koordinaten, um Flottenfahrzeuge an einen Bestimmungsort zu führen, um zum Beispiel an diesem Bestimmungsort neue Ladung aufzunehmen.

### Darstellung der Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Verfahren sowie ein System bereitzustellen, mittels derer beim Vereinbaren eines Zielorts, insbesondere eines Treffpunkts (= eines gemeinsamen Zielpunkts), Schwierigkeiten oder Unklarheiten schon im voraus sicher und zuverlässig beseitigt sowie ausgeschlossen werden können.

Diese Aufgabe wird gemäß der Lehre der vorliegenden Erfindung durch ein Verfahren mit den im Anspruch 1 oder mit den im Anspruch 2 genannten Merkmalen sowie durch ein System mit den im Anspruch 6 genannten Merkmalen gelöst. Vorteilhafte Ausgestaltungen und zweckmäßige Weiterbildungen der vorliegenden Erfindung sind in den jeweiligen Unteransprüchen gekennzeichnet.

Mithin liegt der Kern der vorliegenden Erfindung im Senden von Zielkoordinaten eines Treffpunkts von einem Navigationssystem, insbesondere von einem Radio-Navigationssystem an mindestens ein Navigationssystem, insbesondere an mindestens ein Radio-Navigationssystem.

Hierbei erfolgt unter Nutzung zumeist bereits vorhandener, das heißt zum Beispiel in Kraftfahrzeuge eingebauter Telematiksysteme (zum Beispiel R[adio]N[avigations]S[ysteme] mit integriertem oder angeschlossenem G[lobal]S[ystem for]M[obile Communication]-Interface) die Übermittlung von Positionsdaten bzw. Koordinaten an eine vom Benutzer gewünschte Mobilfunkrufnummer, zum Beispiel durch Verwendung des S[hort]M[essage]S[ervice].

Der Empfänger dieser Kurzmitteilung oder Kurznachricht, im Regelfall ein weiterer (Mobilfunk- und gleichzeitig Verkehrs-)Teilnehmer, akzeptiert nach Erhalt der Kurzmitteilung oder Kurznachricht die Zielkoordinaten und startet an seinem Telematiksystem (zum Beispiel RNS mit integriertem oder angeschlossenem GSM-Interface) die Zielführung zum angegebenen, das heißt durch die Zielkoordinaten definierten Treffpunkt (= gemeinsamer Zielort).

Die vorliegende Erfindung umfaßt - alternativ zum Akzeptieren der Kurzmitteilung oder Kurznachricht sowie alternativ zum sich an das Akzeptieren anschließenden Aktivieren der Zielführung - als erfindungswesentliches Merkmal auch ein Ablehnen der Zielführung, so daß keine weiteren Aktionen bewirkt werden.

Der Grundgedanke der vorliegenden Erfindung beruht auf dem Versenden von Zielkoordinaten an ein Telematiksystem unter Verwendung von mindestens einer Kurzmitteilung oder Kurznachricht, insbesondere unter Verwendung von mindestens einer Daten-SMS (Class 3). Besonders bemerkenswert ist in diesem Zusammenhang, daß die Zielkoordinaten nicht mehr nur von einer Zentrale aus gesendet und für kommerzielle Zwecke genutzt werden, sondern von vielen Inhabern von Telematiksystemen zum Beispiel in der Freizeit genutzt werden können.

Das Telematiksystem, insbesondere das RNS, bietet dann dem Benutzer in zweckmäßiger Weise die Möglichkeit, eine Zieladresse auszuwählen und die Koordinaten dieser Zieladresse an einen oder mehrere (Mobilfunk- und Verkehrs-)Teilnehmer zu senden, die ebenfalls ein Telematiksystem, insbesondere ein RNS, haben, das dieses technische Merkmal (dieses "Feature") unterstützt.

Der Fachmann auf dem vorliegenden technischen Gebiet wird im Hinblick auf die vorliegende Erfindung insbesondere als vorteilhaft zu schätzen wissen, daß Unklarheiten über einen gemeinsamen Zielort (Treffpunkt) und über die Anfahrt zu demselben schon im voraus sicher und zuverlässig beseitigt werden können, denn der Absender (= erster Teilnehmer) und alle Empfänger (= weitere Teilnehmer) der Kurzmitteilung oder Kurznachricht haben das gleiche Ziel und werden sicher von ihrem jeweiligen Telematiksystem, insbesondere von ihrem jeweiligen RNS, dorthin geleitet.

Im Hinblick auf die vorliegende Erfindung ist als weiterer Vorteil zu konstatieren, daß die im Rahmen des Ablaufs des Verfahrens gemäß der vorliegenden Erfindung anfallenden Kosten für den Benutzer im wesentlichen von der Anzahl der gesendeten Kurzmitteilungen oder Kurznachrichten abhängig und somit für den Benutzer bekannt sowie transparent und nachvollziehbar sind.

Die vorliegende Erfindung betrifft des weiteren die Verwendung eines Verfahrens gemäß der vorstehend dargelegten Art und/oder mindestens eines Systems gemäß der vorstehend dargelegten Art in mindestens einem einem Fortbewegungsmittel zugeordneten Multimediaprodukt, insbesondere in mindestens einem Informationssystem für den Führer eines Fortbewegungsmittels, im speziellen in mindestens einem Navigationssystem.

Die vorliegende Erfindung betrifft schließlich die Verwendung eines Verfahrens gemäß der vorstehend dargelegten Art und/oder mindestens eines Systems gemäß der vorstehend dargelegten Art zum Übermitteln der Koordinaten mindestens eines Zielorts, insbesondere der Zielkoordinaten eines Treffpunkts, zwischen mindestens zwei Verkehrsteilnehmern.

### Kurze Beschreibung der Zeichnungen

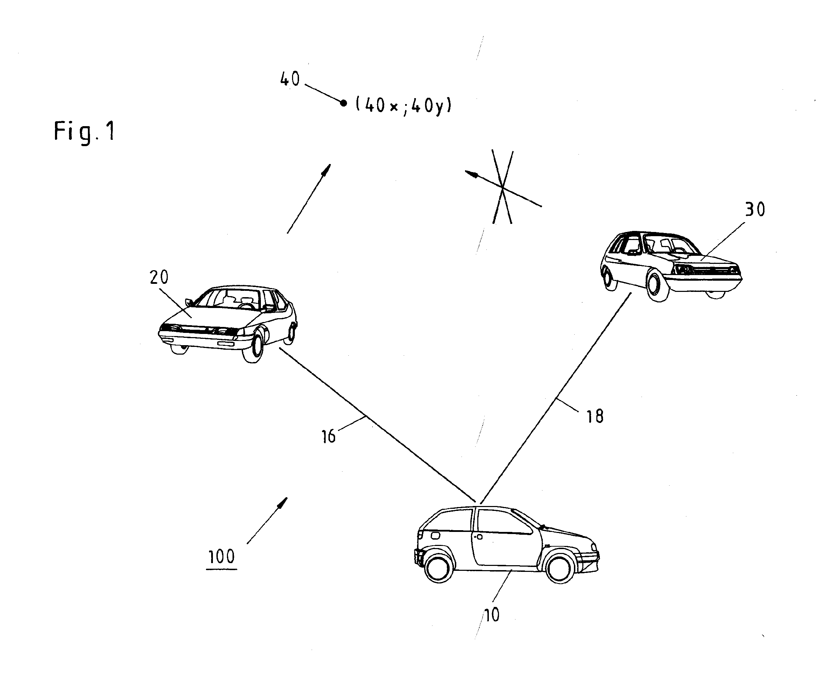

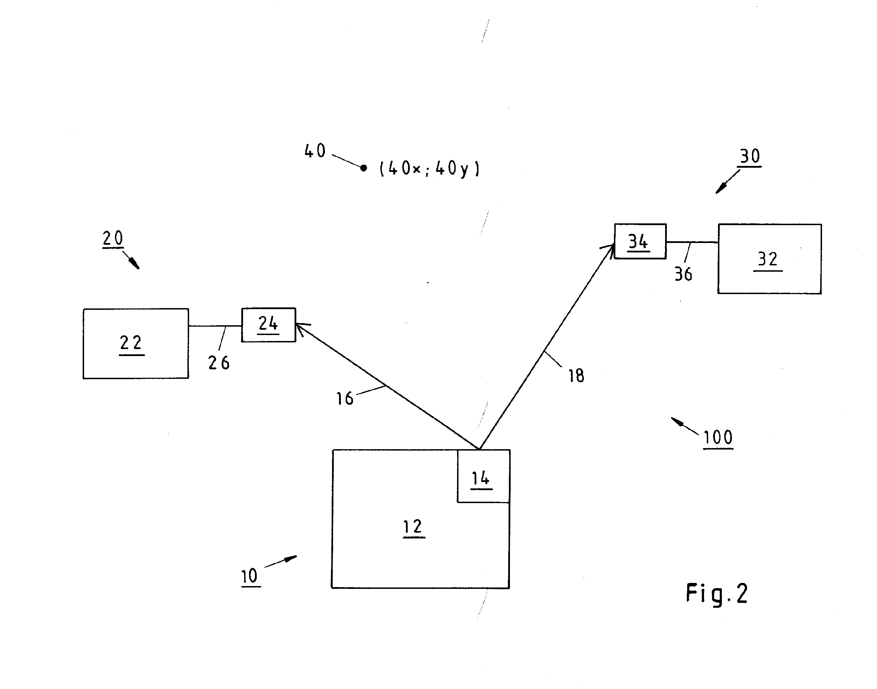

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die den Ansprüchen 1, 2 und 6 nachgeordneten Ansprüche verwiesen, andererseits werden weitere Ausgestaltungen, Merkmale und Vorteile der vorliegenden Erfindung nachstehend anhand des durch die Figuren 1 und 2 veranschaulichten Ausführungsbeispiels näher erläutert.

Es zeigt:
- Fig. 1: in schematischer Darstellung ein Ausführungsbeispiel eines gemäß dem Verfahren gemäß der vorliegenden Erfindung arbeitenden Systems gemäß der vorliegenden Erfindung; und
- Fig. 2: in schematischer Darstellung das Ausführungsbeispiel aus Fig. 1 in technisch detaillierter Wiedergabe.

Gleiche oder ähnliche Ausgestaltungen, Elemente oder Merkmale sind in den Figuren 1 und 2 mit identischen Bezugszeichen versehen.

### Bester Weg zur Ausführung der Erfindung

Mit dem anhand der Figuren 1 und 2 exemplarisch veranschaulichten, gemäß dem Verfahren gemäß der vorliegenden Erfindung arbeitenden System 100 zum Übermitteln von Positionsdaten oder von Koordinaten kann ein erster Mobilfunk- und Verkehrsteilnehmer 10 an seinem Telematiksystem 12 (vgl. Figur 2) den derzeitigen Standort seines Kraftfahrzeugs oder einen durch Zielkoordinaten (40x; 40y) definierten Zielpunkt 40 auswählen; im Falle des vorliegenden Ausführungsbeispiels sucht der erste Mobilfunk- und Verkehrsteilnehmer 10 die Zielkoordinaten (40x; 40y) des Zielpunkts 40 aus.

Um einen Treffpunkt (= gemeinsamer Zielpunkt 40) mit einem zweiten Mobilfunk- und Verkehrsteilnehmer 20 sowie mit einem dritten Mobilfunkund Verkehrsteilnehmer 30 zu vereinbaren, schickt der erste Mobilfunkund Verkehrsteilnehmer 10 diesen Zielpunkt 40 mit den Zielkoordinaten (40x; 40y) mittels einer jeweiligen Kurzmitteilung oder Kurznachricht (SMS 16 bzw. SMS 18) an seine beiden Bekannten, das heißt an die zwei weiteren Mobilfunk- und Verkehrsteilnehmer 20 bzw. 30, die auch mit diesem oder mit einem technisch kompatiblen Telematiksystem 22 bzw. 32 (vgl. Figur 2) ausgerüstet sind.

Anschließend hat der erste Mobilfunk- und Verkehrsteilnehmer 10 die Möglichkeit, die Zielführung seines Telematiksystems 12 zu starten, um das Ziel 40 zu erreichen.

Der zweite, die SMS 16 mit den Zielkoordinaten (40x; 40y) empfangende Mobilfunk- und Verkehrsteilnehmer 20 akzeptiert die Zielkoordinaten (40x; 40y) und startet ebenfalls die Zielführung seines Telematiksystems 22, um das Ziel 40 zu erreichen.

Hingegen lehnt der dritte, die SMS 18 mit den Zielkoordinaten (40x; 40y) empfangende Mobilfunk- und Verkehrsteilnehmer 30 den Inhalt der für ihn bestimmten SMS 18 ab, das heißt der dritte Mobilfunk- und Verkehrsteilnehmer 30 lehnt aufgrund anderweitiger Freizeitinteressen die durch sein Telematiksystem 32 angebotene Zielführung zum Zielpunkt 40 ab, was keine weiteren Aktionen bewirkt.

Aus der technischen Detaildarstellung der Figur 2 geht nun hervor, daß im innerhalb des Kraftfahrzeugs angeordneten Telematiksystem (= RNS 12) des ersten Teilnehmers 10 ein G[lobal]S[ystem for]M[obile Communication]-Mobilfunkmodul 14 integriert ist, mittels dessen die beiden die Zielkoordinaten (40x; 40y) des Zielorts 40 beinhaltenden SMS 16 bzw. 18 vom ersten Teilnehmer 10 automatisch erstellt und an die jeweilige Mobilfunknummer der beiden weiteren Teilnehmer 20 bzw. 30 abgeschickt werden können.

Zum Empfangen bzw. Akzeptieren des Inhalts der versendeten SMS 16 durch den zweiten Teilnehmer 20 und zum Aktivieren bzw. Starten der Zielführung zum Zielort 40 weist das Kraftfahrzeug des zweiten Teilnehmers 20 eine GSM-Mobilfunkschnittstelle (= GSM-Mobilfunkinterface 24) auf, die über einen Datenbus 26 mit dem Telematiksystem (= RNS 22) des zweiten Teilnehmers 20 verbunden ist. Dieses RNS 22 des zweiten Teilnehmers 20 ist in der Lage, die Zielführung für das Kraftfahrzeug des zweiten Teilnehmers 20 zum Zielort 40 zu starten, etwa durch Einlegen einer Navigations-C[ompact]D[isc].

In analoger Ausgestaltung weist das Kraftfahrzeug des dritten Teilnehmers 30 eine GSM-Mobilfunkschnittstelle 34 auf, die über eine serielle RS 232-Verbindung 36 mit dem Telematiksystem (= RNS 32) des dritten Teilnehmers 30 verbunden ist; zwar kann der dritte Teilnehmer 30 mittels dieses GSM-Mobilfunkinterfaces 34 den Inhalt der an ihn versendeten SMS 18 empfangen, jedoch entscheidet sich der dritte Teilnehmer 30 wegen der genannten anderweitigen Freizeitinteressen sodann, nicht zum gemeinsamen Zielort 40 (= potentieller Treffpunkt mit dem ersten Teilnehmer 10 und mit dem zweiten Teilnehmer 20) zu kommen; aus diesem Grunde lehnt der dritte Teilnehmer 30 den Inhalt der SMS 18 und damit auch die durch sein RNS 32 angebotene Zielführung zum Zielort 40 ab.

Abschließend sei noch angemerkt, daß die vorliegende Erfindung - alternativ zum Ansteuern eines räumlich beabstandeten Zielpunkts 40 - als erfindungswesentliches Merkmal auch umfaßt, daß der Zielort 40 räumlich
- mit dem aktuellen Standort des ersten Teilnehmers 10 oder
- mit dem aktuellen Standort der weiteren Teilnehmers 20 oder 30 zusammenfällt.

Unabhängig hiervon kann die Kurzmitteilung oder Kurznachricht 16, 18 in erfindungswesentlicher Weise anstelle auf G[lobal]S[ystem for]M[obile Communication]-Basis auch
- auf D[igital]E[uropean]C[ordless]T[elephone]-Basis,
- auf G[eneral]P[acket]R[adio]S[ervice]-Basis,
- auf U[niversal]M[obile]T[elecommunication]S[ystem]-Basis,
- auf W[ireless]A[pplication]P[rotocol]-Basis, oder
- auf M[ultimedia]M[essage]S[ervice]-Basis
erstellt, versendet und/oder empfangen werden.

## Patentansprüche

1. Verfahren zum Übermitteln der Positionsdaten oder Koordinaten (40x; 40y) mindestens eines Zielorts (40), insbesondere der Zielkoordinaten eines Treffpunkts, von einem ersten Teilnehmer (10), insbesondere von einem ersten Verkehrsteilnehmer, an mindestens einen weiteren Teilnehmer (20, 30), insbesondere an mindestens einen weiteren Verkehrsteilnehmer, aufweisend die folgenden Schritte:
[a] Erstellen mindestens einer die Positionsdaten oder Koordinaten (40x; 40y) des Zielorts (40) beinhaltenden Kurzmitteilung oder Kurznachricht (16, 18), insbesondere in Form von S[hort]M[essage]S[ervice] oder in Form von M[ultimedia]M[essage]S[ervice], durch den ersten Teilnehmer (10);
[b] Versenden der erstellten Kurzmitteilung oder Kurznachricht (16, 18) an den weiteren Teilnehmer (20, 30), insbesondere an die Mobilfunknummer des weiteren Teilnehmers (20, 30);
[c] Empfangen bzw. Akzeptieren des Inhalts der versendeten Kurzmitteilung oder Kurznachricht (16, 18) durch den weiteren Teilnehmer (20, 30); und
[d] Aktivieren bzw. Starten mindestens einer für den weiteren Teilnehmer (20, 30) vorgesehenen Zielführung zum Zielort (40).

2. Verfahren zum Übermitteln der Positionsdaten oder Koordinaten (40x; 40y) mindestens eines Zielorts (40), insbesondere der Zielkoordinaten eines Treffpunkts, von einem ersten Teilnehmer (10), insbesondere von einem ersten Verkehrsteilnehmer, an mindestens einen weiteren Teilnehmer (20, 30), insbesondere an mindestens einen weiteren Verkehrsteilnehmer, aufweisend die folgenden Schritte:
[a] Erstellen mindestens einer die Positionsdaten oder Koordinaten (40x; 40y) des Zielorts (40) beinhaltenden Kurzmitteilung oder Kurznachricht (16, 18), insbesondere in Form von S[hort]M[essage]S[ervice] oder in Form von M[ultimedia]M[essage]S[ervice], durch den ersten Teilnehmer (10);
[b] Versenden der erstellten Kurzmitteilung oder Kurznachricht (16, 18) an den weiteren Teilnehmer (20, 30), insbesondere an die Mobilfunknummer des weiteren Teilnehmers (20, 30);
[c] Ablehnen des Inhalts der versendeten Kurzmitteilung oder Kurznachricht (16, 18) durch den weiteren Teilnehmer (20, 30); und
[d] Ablehnen mindestens einer für den weiteren Teilnehmer (20, 30) vorgesehenen Zielführung zum Zielort (40).

3. Verfahren gemäß Anspruch 1 oder 2, **dadurch gekennzeichnet, daß** die Kurzmitteilung oder Kurznachricht (16, 18)
- auf D[igital]E[uropean]C[ordless]T[elephone]-Basis,
- auf G[eneral]P[acket]R[adio]S[ervice]-Basis,
- auf G[lobal]S[ystem for]M[obile Communication]-Basis,
- auf U[niversal]M[obile]T[elecommunication]S[ystem]-Basis oder
- auf W[ireless]A[pplication]P[rotocol]-Basis
erstellt, versendet und/oder empfangen wird.

4. Verfahren gemäß mindestens einem der Ansprüche 1 bis 3, **dadurch gekennzeichnet, daß** die Kurzmitteilung oder Kurznachricht (16, 18) als Daten-SMS, insbesondere gemäß Klasse 3 (class 3), erstellt, versendet und/oder empfangen wird.

5. Verfahren gemäß mindestens einem der Ansprüche 1 bis 4, **dadurch gekennzeichnet, daß** der Zielort (40) räumlich
- mit dem aktuellen Standort des ersten Teilnehmers (10) oder
- mit dem aktuellen Standort des weiteren Teilnehmers (20, 30) identisch ist.

6. System (100) zum Übermitteln der Positionsdaten oder Koordinaten (40x; 40y) mindestens eines Zielorts (40), insbesondere der Zielkoordinaten eines Treffpunkts, von einem ersten Teilnehmer (10), insbesondere von einem ersten Verkehrsteilnehmer, an mindestens einen weiteren Teilnehmer (20, 30), insbesondere an mindestens einen weiteren Verkehrsteilnehmer, aufweisend
- mindestens ein beim ersten Teilnehmer (10) angeordnetes Telematiksystem (12), insbesondere Radionavigationssystem, mit mindestens einem integrierten oder angeschlossenen Mobilfunkmodul (14) zum Erstellen mindestens einer die Positionsdaten oder Koordinaten (40x; 40y) des Zielorts (40) beinhaltenden Kurzmitteilung oder Kurznachricht (16, 18), insbesondere in Form von S[hort]M[essage]S[ervice] oder in Form von M[ultimedia]M[essage]S[ervice], durch den ersten Teilnehmer (10) und zum Versenden der erstellten Kurzmitteilung oder Kurznachricht (16, 18) an den weiteren Teilnehmer (20, 30), insbesondere an die Mobilfunknummer des weiteren Teilnehmers (20, 30);
- mindestens ein beim weiteren Teilnehmer (20, 30) angeordnetes Telematiksystem (22, 32), insbesondere Radionavigationssystem, mit mindestens einem integrierten oder angeschlossenen Mobilfunkmodul (24, 34)
- - zum Empfangen bzw. Akzeptieren des Inhalts der versendeten Kurzmitteilung oder Kurznachricht (16, 18) durch den weiteren Teilnehmer (20, 30) und zum Aktivieren bzw. Starten mindestens einer Zielführung zum Zielort (40) oder
- - zum Ablehnen des Inhalts der versendeten Kurzmitteilung oder Kurznachricht (16, 18) durch den weiteren Teilnehmer (20, 30) und zum Ablehnen mindestens einer für den weiteren Teilnehmer (20, 30) vorgesehenen Zielführung zum Zielort (40).

7. System gemäß Anspruch 6, **dadurch gekennzeichnet, daß** das an das Telematiksystem (12, 22, 32) angeschlossene Mobilfunkmodul (14, 24, 34) als mindestens eine Mobilfunkschnittstelle, insbesondere
- als mindestens ein D[igital]E[uropean]C[ordless]T[elephone]-Interface,
- als mindestens ein G[eneral]P[acket]R[adio]S[ervice]-Interface,
- als mindestens ein G[lobal]S[ystem for]M[obile Communication]-Interface,
- als mindestens ein U[niversal]M[obile]T[elecommunication] S[ystem]-Interface oder
- als mindestens ein W[ireless]A[pplication]P[rotocol]-Interface, ausgebildet ist.

8. System gemäß Anspruch 7, **dadurch gekennzeichnet, daß** die Mobilfunkschnittstelle (24 bzw. 34) mittels mindestens eines Datenbusses (26) oder mittels mindestens einer seriellen Verbindung (36), insbesondere mittels mindestens einer RS 232-Verbindung, an das Telematiksystem (22 bzw. 32) angeschlossen ist.

9. Verwendung eines Verfahrens gemäß mindestens einem der Ansprüche 1 bis 5 und/oder mindestens eines Systems (100) gemäß mindestens einem der Ansprüche 6 bis 8 in mindestens einem einem Fortbewegungsmittel zugeordneten Multimediaprodukt, insbesondere in mindestens einem Informationssystem für den Führer eines Fortbewegungsmittels, im speziellen in mindestens einem Navigationssystem.

10. Verwendung eines Verfahrens gemäß mindestens einem der Ansprüche 1 bis 5 und/oder mindestens eines Systems (100) gemäß mindestens einem der Ansprüche 6 bis 8 zum Übermitteln der Positionsdaten oder Koordinaten (40x; 40y) mindestens eines Zielorts (40), insbesondere der Zielkoordinaten eines Treffpunkts, zwischen mindestens zwei Verkehrsteilnehmern (10, 20, 30).
